# EUROPEAN PATENT APPLICATION

(11) **EP 4 811 767 A1**
(43) Date of publication of application: **23.09.2026**
(21) Application number: 24915075.6
(22) Date of filing: 09.12.2024
(51) Int. Cl.: H04N 9/31

(54) **PROJECTION METHOD AND APPARATUS FOR AUTOMATICALLY ADJUSTING DISPLAY SCALE, AND DEVICE AND STORAGE MEDIUM**

(30) Priority: 07.01.2024 CN 202410022607
(71) Applicant: XGIMI Tech Co., Ltd., Chengdu, Sichuan 610000 (CN)
(72) Inventor: NING, Zhong, Chengdu, Sichuan 610041 (CN)
(74) Representative: ZBM Patents - Zea, Barlocci & Markvardsen
(86) International application number: PCT/CN2024/137730
(87) International publication number: WO 2025/145859

(57) **Abstract**

Disclosed in the present invention are a projection method and apparatus for automatically adjusting a display scale, and a device and a storage medium. The method comprises: first determining a first display area with a first display scale and a second display area with a second display scale in an area to be subjected to projection, wherein the first display scale is the display scale of target display content, and the second display scale is a preset display scale or the display scale of current display content; determining a target display scale on the basis of a display area, the width and/or length of which meet target requirements, in the first display area and the second display area; and projecting the target display content on the basis of the target display scale. By means of the present invention, a display scale can be intelligently switched on the basis of a projection environment and the original scale of a video source or a picture, thereby optimizing the presentation effect of display content.

## Description

### TECHNICAL FIELD

The present invention relates to the technical field of projection adjustment, and more particularly to a projection method and apparatus for automatically adjusting a display ratio, a projection device and a storage medium.

### BACKGROUND

In a current projection scenario involving side projection, an image is generally displayed at a 16:9 aspect ratio, resulting in a large blank area. However, many video sources have other aspect ratios such as 21:9. An existing method is to crop a 21:9 area from the 16:9 area for display, which cannot achieve a sufficient projection effect and also loses part of the image at the edges of the 16:9 area due to cropping.

### SUMMARY

In view of this, the present invention provides a projection method and apparatus for automatically adjusting a display ratio, a projection device and a storage medium. After recognizing a projection plane environment and angle, a default projection ratio of a machine is adjusted according to an original ratio of a video source or image, and a mechanism of the machine, so as to optimize a presentation effect of a display content to obtain a best projection effect.

To solve the above technical problem, the present invention provides a projection method for automatically adjusting a display ratio, which includes the following operations.

A first display area having a first display ratio and a second display area having a second display ratio in an area to be projected are determined, the first display ratio is a display ratio of a target display content, and the second display ratio is a preset display ratio or a display ratio of a current display content.

A target display ratio is determined based on a display area, between the first display area and the second display area, having a width and/or a length that meets a target requirement.

The target display content is projected based on the target display ratio.

As an optional implementation, the determining, in an area to be projected, a first display area having a first display ratio and a second display area having a second display ratio includes the following operations.

A third display area having the first display ratio and a fourth display area having the second display ratio are determined in the area to be projected under an obstacle avoidance condition, according to obstacle information and projection angle information.

A fifth display area having the first display ratio and a sixth display area having the second display ratio are determined in the area to be projected under a non-obstacle avoidance condition.

The determining a target display ratio based on a display area, between the first display area and the second display area, having a width and/or a length that meets a target requirement includes the following operations.

In response to receiving an obstacle avoidance selection instruction, the third display area is used as the first display area, and the fourth display area is used as the second display area; in response to receiving a non-obstacle avoidance selection instruction, the fifth display area is used as the first display area, and the sixth display area is used as the second display area.

Alternatively, the target display ratio is determined based on a display area, among the third display area, the fourth display area, the fifth display area and the sixth display area, having a width and/or a length that meets the target requirement.

As an optional implementation, the determining a target display ratio based on a display area, between the first display area and the second display area, having a width and/or a length that meets a target requirement includes the following operations.

In response to receiving a screen selection instruction, a screen ratio is used as the target display ratio.

As an optional implementation, the projecting the target display content based on the target display ratio includes the following operations.

Target position information is determined based on position information of the first display area and position information of the second display area.

An optical engine is rotated to a target position based on the target position information, such that a center of the first display area moves to a position in which a center of the second display area is located.

The target display content is projected at the target position based on the target display ratio.

As an optional implementation, the determining target position information based on position information of the first display area and position information of the second display area includes the following operations.

First position information of a first center of the first display area is acquired.

Second position information of a second center of the second display area is acquired.

The target position information is determined based on the first position information and the second position information.

As an optional implementation, the determining the target position information based on the first position information and the second position information includes the following operations.

A first connection line between the first center and the optical engine is constructed and a second connection line between the second center and the optical engine is constructed, based on the first position information and the second position information.

Target rotation information is determined based on an angle between the first connection line and the second connection line in a horizontal direction and an angle between the first connection line and the second connection line in a vertical direction.

As an optional implementation, the projection method further includes the following operations.

After projecting the target display content at a target position based on the target display ratio, a keystone correction operation is performed on a projected image.

In another aspect, the present invention further provides a projection apparatus for automatically adjusting a display ratio, which includes an image recognition module, a determination module and a projection module.

The image recognition module is configured to determine, in an area to be projected, a first display area having a first display ratio and a second display area having a second display ratio. The first display ratio is a display ratio of a target display content, and the second display ratio is a preset display ratio or a display ratio of a current display content.

The determination module is configured to determine a target display ratio based on a display area, between the first display area and the second display area, having a width and/or a length that meets a target requirement.

The projection module is provided with a lens and is configured to project the target display content based on the target display ratio.

In another aspect, the present invention further provides a projection device, which includes a processor and a memory. The memory is configured to store a computer program, and the processor is configured to execute the computer program to implement the above projection method for automatically adjusting the display ratio.

In another aspect, the present invention further provides a storage medium having a computer program stored therein. The computer program is executed to implement the above projection method for automatically adjusting the display ratio.

The beneficial effect of the present invention is as follows:

In the present invention, the target display ratio is determined based on the display area, between the first display area and the second display area, having the width and/or the length that meets the target requirement, and then the target display content is projected based on the target display ratio. In this way, the display ratio can be switched intelligently according to a projection environment and the original ratio of the video source or image, so as to optimize the presentation effect of the display content.

### BRIEF DESCRIPTION OF THE DRAWINGS

FIG. 1 is a schematic flowchart illustrating a projection method for automatically adjusting a display ratio according to an embodiment of the present invention.
FIG. 2 is a schematic diagram illustrating a first display area and a second display area according to an embodiment of the present invention.
FIG. 3 is a schematic diagram illustrating optical paths for projecting an optical center at a first display ratio and at a second display ratio according to an embodiment of the present invention.
FIG. 4 is a schematic diagram illustrating a projection coordinate system constructed based on a current projection environment according to an embodiment of the present invention.

### DETAILED DESCRIPTION

In order to enable those skilled in the art to better understand the technical solution of the present invention, the present invention will be described in further detail below in combination with the specific implementations.

### Embodiment

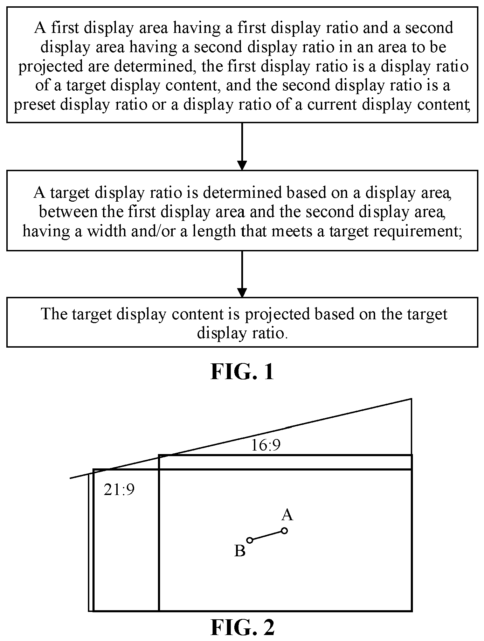

Please refer to FIG. 1 to FIG. 4. An embodiment provides a projection method for automatically adjusting a display ratio, which includes the following operations.

A first display area having a first display ratio and a second display area having a second display ratio in an area to be projected are determined. The first display ratio is a display ratio of a target display content, and the second display ratio is a preset display ratio or a display ratio of a current display content.

A target display ratio is determined based on a display area, between the first display area and the second display area, having a width and/or a length that meets a target requirement.

The target display content is projected based on the target display ratio.

The above "meeting the target requirement" generally can be understood as projecting a maximum display effect. However, maximization is merely one possible beneficial effect, i.e., a beneficial effect achieved when selecting the display ratio corresponding to a display area having a larger width for display. In addition to selecting the larger width, a larger length can be selected. For example, when a mobile phone performs screen mirroring and the phone screen is oriented vertically, selecting the larger length yields a better display effect. Alternatively, both the width and the length may be comprehensively considered. Alternatively, when the area to be projected includes a screen, a display ratio corresponding to a display area having a width that better matches a width of the screen may be selected. Therefore, the maximization is merely one of the effects meeting the target requirement. The specific length, width, or other matching modes are not limited by the present embodiment, and the optimal selection may be made based on an actual projection environment requirement.

Please refer to FIG. 2 again, in an optional implementation, FIG. 2 is a schematic diagram illustrating the first display area and the second display area in the area to be projected. In the embodiment of the present invention, it is assumed that the first display ratio is 21:9, and the second display ratio is the preset display ratio of 16:9. After a projector is activated, a display ratio of a projected image projected onto the area to be projected is 16:9 by default. However, display ratios of many video sources may be other ratios such as 21:9. If the display is performed only based on the display ratio of 16:9, an optimal display effect cannot be provided to a user. Therefore, an objective of the present embodiment is to enable a projection apparatus to automatically recognize an optimal display ratio for automatic switching, thereby eliminating the need for manual adjustment attempts. The optimal display ratio mentioned herein can be determined by selecting whichever display area is larger, or selecting whichever display ratio matches a target size, which is not limited in the present embodiment.

Optionally, before performing the above adjustment, the present embodiment needs to determine the first display area having the first display ratio and the second display area having the second display ratio in the area to be projected, which includes the following operations.

Sensors (such as an infrared camera, an RGB camera, and a distance-measuring sensor) are activated and invoked, to analyze obstacle information of the area to be projected and a projection angle, and further, to analyze whether a projectable screen is present. Then, based on the obstacle information and projection angle information, a third display area having the first display ratio and a fourth display area having the second display ratio are determined in the area to be projected under an obstacle avoidance condition; and a fifth display area having the first display ratio and a sixth display area having the second display ratio are determined in the area to be projected under a non-obstacle avoidance condition.

The above determining a target display ratio based on a display area, between the first display area and the second display area, having a width and/or a length that meets a target requirement includes the following operations. In response to receiving an obstacle avoidance selection instruction, the third display area is used as the first display area, and the fourth display area is used as the second display area; in response to receiving a non-obstacle avoidance selection instruction, the fifth display area is used as the first display area, and the sixth display area is used as the second display area. Alternatively, the target display ratio is determined based on a display area, among the third display area, the fourth display area, the fifth display area and the sixth display area, having a width and/or a length that meets the target requirement.

In the above obstacle avoidance selection process, it should be noted that, in the present embodiment, the selection of the display areas under the non-obstacle avoidance condition may be performed alone, in which case the fifth display area is the first display area and the sixth display area is the second display area. Alternatively, the selection of the display areas under the obstacle avoidance condition may be performed alone, in which case the third display area is the first display area and the fourth display area is the second display area. Alternatively, the selection of the display areas under both the obstacle avoidance condition and the non-obstacle avoidance condition may be performed simultaneously, and then the display area that meets the requirement is determined according to actual needs.

Furthermore, the determining a target display ratio based on a display area, between the first display area and the second display area, having a width and/or a length that meets a target requirement includes the following operations. In response to receiving a screen selection instruction, a screen ratio is used as the target display ratio. If screen alignment is performed, it is equivalent to using the screen ratio as the target display ratio, without further considering an actual projection area (such as a flat surface, a wall surface, or the like). Therefore, when the user selects a screen condition, a screen alignment function is directly performed; when the user selects the obstacle avoidance condition, size information of the display area under the obstacle avoidance condition is selected; when the user selects the non-obstacle avoidance condition, size information of the display area under the non-obstacle avoidance condition is selected for alignment. In an implementable scenario, when a projected display image is rectangular, the size information of the above display area may include length information and width information.

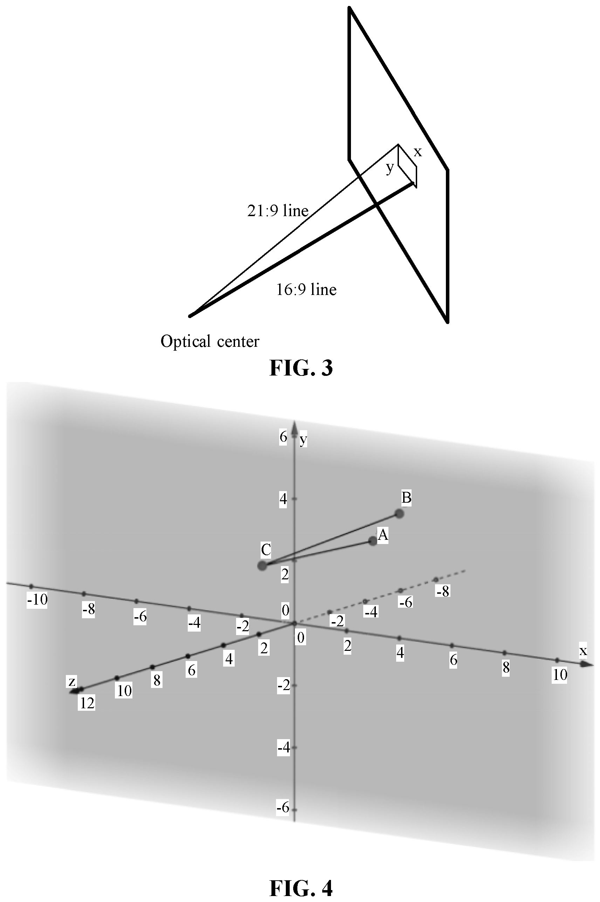

The above operations are used for determining a target display area. After confirming the display area, please refer to FIG. 2 and FIG. 3 again. Since centers of display areas having different display ratios are not at the same point, a misalignment gap is present in the projected image. In order to provide a better use effect and user experience for the present embodiment, an optical engine can be controlled to rotate in a horizontal direction and a vertical direction, so that center positions of the images remain unchanged under different display ratios, thereby improving an experience effect.

Implemented in the present embodiment, the projecting the target display content based on the target display ratio includes the following operations.

Target position information is determined based on the position information of the first display area and the position information of the second display area.

An optical engine is rotated to a target position based on the target position information, such that a center of the first display area moves to a position in which a center of the second display area is located.

The target display content is projected at the target position based on the target display ratio.

The target position information can be calculated through the center point position information of the two display areas, or through the four corner point position information of the two display areas, or through other calculation modes. The target position information may be a horizontal angle and/or vertical angle that the optical engine needs to rotate, or may be coordinate information of the target position (optionally, the position in which the center of the second display area is located).

As an optional implementation, the determining target position information based on position information of the first display area and position information of the second display area includes the following operations.

First position information of a first center of the first display area is acquired.

Second position information of a second center of the second display area is acquired.

The target position information is determined based on the first position information and the second position information.

Implemented in the present embodiment, the first position information and the second position information may include coordinates of the first center and coordinates of the second center after constructing a coordinate system based on a current projection environment. Therefore, a distance and an inclination angle between the two center points can be calculated according to the coordinates of the first center and the coordinates the second center, and then the distance and the inclination angle are converted into an angle that the optical engine needs to rotate, so as to determine the target position information. Optionally, when the optical engine is at a target projection position, a projection coordinate system based on the projection environment is constructed, and then the first position information of the first center of the first display area and the second position information of the second center of the second display area in the projection coordinate system are obtained through a distance-measuring module installed at the optical engine position.

Therefore, the determining the target position information includes the following operations.

A first connection line between the first center and the optical engine is constructed and a second connection line between the second center and the optical engine is constructed, based on the first position information and the second position information.

Target rotation information is determined based on an angle between the first connection line and the second connection line in a horizontal direction and an angle between the first connection line and the second connection line in a vertical direction.

Please refer to FIG. 4 again. FIG. 4 illustrates a projection scenario in which a projection coordinate system is established. The projection coordinate system includes the first center of the first display area, the second center of the second display area and the optical engine (where the optical engine is regarded as a mass point). The projection coordinate system does not completely correspond to a real projection environment and is used as an example of the above connection mode. In the legend, C represents a position in which the optical engine is located, and the ray CA and ray CB are the first connection line and/or the second connection line, respectively.

Through the above solution, the determining target rotation information based on the angle between the first connection line and the second connection line in the horizontal direction and the angle between the first connection line and the second connection line in the vertical direction refers to determining an offset required to transition the first connection line to coincide with the second connection line. This offset can be calculated by the angles between the first connection line and the second connection line in the horizontal direction and vertical direction respectively.

In an implementation, for example, the second display ratio is 16:9, the first display ratio is 21:9, and the center positions corresponding to the second display area and the first display area are (*x*0, *y*0) and (*x*1, *y*1), respectively. The distance information *z*0 and *z*1 corresponding to the two center positions may be directly obtained through the distance-measuring module, thereby determining three-dimensional coordinates (*x*0, *y*0, *z*0) and (*x*1, *y*1, *z*1) of the two center positions relative to the optical engine. In order to move the center position of the first display area to the position of the center of the second display area (i.e., point B in FIG. 2 is moved to the position in which point A is located), it is necessary to calculate angles between two rays extending from the optical engine to the coordinates (*x*1, *y*1, *z*1) and (*x*0, *y*0, *z*0) in the horizontal direction and the vertical direction. That is, an angle between a vector (*x*1, *y*0, *z*1) and a vector (*x*0, *y*0, *z*0) is the horizontal angle, and an angle between a vector (*x*0, *y*1, *z*1) and a vector (x0, y0, z0) is the vertical angle. After obtaining angle data, the angle data is transmitted to a drive module of the optical engine, the optical engine is rotated to the respective angle. After the optical engine reaches the target position, the target display content is projected based on the target display ratio. Specifically, after the optical engine reaches the target position, the display area having the target display ratio can be obtained.

Through the above solution, the present embodiment is implemented in an implementation scenario as follows.

During projection preparation, it is first detected whether there are an obstacle in a projection area. If there is the obstacle, a maximum 16:9 display area (*x*, *y*, *w*, *h*) and a maximum 21:9 display area (*X*, *Y*, *W*, *H*) are positioned in the area to be projected based on an obstacle avoidance mode. Herein *x*, *y* represent coordinates of a top-left corner, and *w*, *h* represent a length and a width of the display area. Similarly, the maximum 16:9 display area (*x*, *y*, *w*, *h*) and the maximum 21:9 display area (*X*, *Y*, *W*, *H*) can also be positioned in the area to be projected without considering any obstacle. Then, a relationship between *W* and *w* is compared. Referring to FIG. 2 again, it can be assumed that when a display width of a 21:9 image is greater than that of a 16:9 image according to an actual need, a condition for switching to 21:9 is met. Accordingly, a display ratio of 21:9 is enabled for projection, and image display correction is completed.

In this way, in the present embodiment, the display ratio can be switched intelligently according to the projection environment and a projection content ratio, so as to maximize the display image. Furthermore, alignment of image centers can be ensured when switching between different ratio images, without affecting a viewing experience of the user.

In addition, after projecting the target display content at the target position based on the target display ratio, the present embodiment may further perform the keystone correction operation and the obstacle avoidance operation on the image based on production conditions and use environments. As an optional implementation, the keystone correction operation includes the following operations: a projected image of the projector is acquired; gray-scale processing and down-sampling are performed on the projected image, respectively; a gradient value and a gradient direction for each pixel are calculated; and gradient values of all pixels are sorted to find similar gradient values within a preset gradient direction, thereby determining multiple strip areas having widths; a centerline of each strip area represents a position of the strip area, multiple detection straight lines may be established; lengths of the multiple detection straight lines are compared to determine edge lines; coordinates of intersection points of the edge lines are determined, and distortion magnitudes of the image in the horizontal direction and the vertical direction are determined based on the coordinates of the intersection points; and an angular magnitude required to correct the projected image into a rectangular image is determined according to the coordinates of the intersection points, and is sent to a processing chip of the projector for adjustment.

The obstacle avoidance operation may include sensing obstacle avoidance and non-sensing obstacle avoidance, and the present embodiment is preferably implemented in a non-sensing obstacle avoidance approach. Firstly, environmental information is collected at a target projection position through an image sensor; three-dimensional spatial data is obtained, and depth obstacle feature points are extracted; an infrared segmentation map of a projection plane is constructed, and the infrared obstacle feature points are extracted. Then the depth obstacle feature points and the infrared obstacle feature points are filtered, the filtering process comprises three stages, as follows:
Stage 1: Feature points belonging to both the depth obstacle feature points and the infrared obstacle feature points are marked, and all marked feature points are treated as the target obstacle points.
Stage 2: Area filtering is performed on unmarked depth obstacle feature points; points having an area less than or equal to a first preset area are removed according to a filtering result; and remaining points are treated as the target obstacle points.
Stage 3: Area filtering is performed on unmarked infrared obstacle feature points; points having an area less than or equal to a second preset area are removed according to a filtering result; a region of interest around remaining infrared obstacle feature points is established, an average infrared intensity value of the region of interest is compared with an average pixel intensity value of the projection plane, and the infrared obstacle feature points meeting a preset condition are marked as the target obstacle points according to a comparison result, so as to obtain an obstacle recognition result.

Afterwards, an obstacle feature map is obtained in an image sensor coordinate system based on the obstacle recognition result.

The obstacle feature map is mapped to a projection coordinate system based on a homography mapping relationship between the infrared segmentation map and a projection image, to obtain an obstacle avoidance mask in the projection coordinate system.

A final projection drop point value is searched for based on the obstacle avoidance mask result and according to a preset projection ratio, so as to perform projection.

In another aspect, an embodiment further provides a projection apparatus for automatically adjusting a display ratio, which includes an image recognition module, a determination module and a projection module.

The image recognition module is configured to determine, in an area to be projected, a first display area having a first display ratio and a second display area having a second display ratio. The first display ratio is a display ratio of a target display content, and the second display ratio is a preset display ratio or a display ratio of a current display content.

The determination module is configured to determine a target display ratio based on a display area, between the first display area and the second display area, having a width and/or a length that meets a target requirement.

The projection module is provided with a lens and is configured to project the target display content based on the target display ratio.

In another aspect, an embodiment further provides a projection device, which includes a processor and a memory. The memory is configured to store a computer program, and the processor is configured to execute the computer program to implement the above projection method for automatically adjusting the display ratio.

In another aspect, an embodiment further provides a storage medium having a computer program stored therein. The computer program is executed to implement the above projection method for automatically adjusting the display ratio.

### Embodiment 2

The objective of the present embodiment is to provide a projection method scenario for automatically adjusting the display ratio based on Embodiment 1, which includes:
A user opens a content to be displayed (e.g., the content to be displayed is a video, and therefore the content to be displayed includes information such as images, dimensions, and ratios). A projection device obtains a display ratio of the content to be displayed, such as obtaining a display ratio of 21:9. After obtaining parameters of the display ratio, sensors (such as an infrared camera, an RGB camera, and a distance-measuring sensor) are activated and invoked, to analyze obstacle information on a projection wall surface, a projection angle, and whether a projectable screen is present. An optimal 16:9 display area and an optimal 21:9 display area in a current projection environment are respectively calculated (where these ratios are selected for illustrating the present embodiment, and other ratios such as 4:3 may also be used, which is not limited in the present embodiment) based on the obstacle information and the projection angle, so as to obtain width information (which may also be length information, a ratio, or the like, and is not limited in the present embodiment) of the two display ratios under both an obstacle avoidance condition and a non-obstacle avoidance condition.

When the user selects a screen condition, a screen alignment function is directly performed; when the user selects the obstacle avoidance condition, width information under the obstacle avoidance condition is selected; when the user selects the non-obstacle avoidance condition, width information under the non-obstacle avoidance condition is selected. In an optional projection environment, as illustrated in FIG. 2, the width information of 21:9 is compared with the width information of 16:9; if the width of 21:9 is greater than the width of 16:9, it is intelligently determined that, in the current environment, an image displayed when switching to 21:9 is larger than an image at 16:9, and switching to the display ratio of 21:9 is directly performed.

In addition, an embodiment further provides a method for adjusting a projection center, which includes the following operations.

Center positions of images of the two display ratios of 16:9 and 21:9 are calculated; and angles in a horizontal position and a vertical position are calculated according to connection lines between the center positions and an optical engine, the optical engine can be controlled to rotate in a horizontal direction and a vertical direction, so that center positions of the images remain unchanged under different display ratios, thereby improving an experience effect. For example, center positions corresponding to a 16:9 display area and a 21:9 display area are (*x*0, *y*0) and (*x*1, *y*1), respectively. The distance information *z*0 and *z*1 corresponding to the two center positions may be directly obtained through a distance-measuring module, thereby determining three-dimensional coordinates (*x*0, *y*0, *z*0) and (*x*1, *y*1, *z*1) of the two center positions relative to the optical engine. In order to move the center position of the 21:9 display area to be consistent with the center position of the 16:9 display area, it is necessary to calculate angles between two rays extending from the optical engine to the coordinates (*x*1, *y*1, *z*1) and (*x*0, *y*0, *z*0) in the horizontal direction and the vertical direction. That is, an angle between a vector (*x*1, *y*0, *z*1) and a vector (*x*0, *y*0, *z*0) is a horizontal angle, and an angle between a vector (*x*0, *y*1, *z*1) and a vector (x0, y0, z0) is a vertical angle.

After obtaining angle data, the angle data is transmitted to a drive module, and the optical engine is rotated to the respective angle. After reaching the position, a display area having the 21:9 display ratio is obtained again to correct the image. Therefore, in the present embodiment, the display ratio can be switched intelligently according to a projection environment and the original ratio of the video source or image, so as to optimize the presentation effect of the display content. Furthermore, alignment of image centers can be ensured when switching between different ratio images, thereby providing the user with an optimal viewing experience.

The above are only the preferred embodiments of the present invention. It should be pointed out that the above preferred embodiments should not be construed as limiting the present invention. The protection scope of the present invention should be subject to the scope defined by the claims. For those of ordinary skill in the art, several improvements and modifications can be made without departing from the spirit and scope of the present invention, and these improvements and modifications should also be considered as the protection scope of the present invention.

## Claims

1. A projection method for automatically adjusting a display ratio, comprising:
determining, in an area to be projected, a first display area having a first display ratio and a second display area having a second display ratio, wherein the first display ratio is a display ratio of a target display content, and the second display ratio is a preset display ratio or a display ratio of a current display content;
determining a target display ratio based on a display area, between the first display area and the second display area, having a width and/or a length that meets a target requirement; and
projecting the target display content based on the target display ratio.

2. The projection method for automatically adjusting the display ratio of claim 1, wherein the determining, in an area to be projected, a first display area having a first display ratio and a second display area having a second display ratio comprises:
determining, in the area to be projected, a third display area having the first display ratio and a fourth display area having the second display ratio under an obstacle avoidance condition, according to obstacle information and projection angle information;
determining, in the area to be projected, a fifth display area having the first display ratio and a sixth display area having the second display ratio under a non-obstacle avoidance condition;
wherein the determining a target display ratio based on a display area, between the first display area and the second display area, having a width and/or a length that meets a target requirement comprises:
in response to receiving an obstacle avoidance selection instruction, using the third display area as the first display area, and using the fourth display area as the second display area; in response to receiving a non-obstacle avoidance selection instruction, using the fifth display area as the first display area, and using the sixth display area as the second display area; or
determining the target display ratio based on a display area, among the third display area, the fourth display area, the fifth display area and the sixth display area, having a width and/or a length that meets the target requirement.

3. The projection method for automatically adjusting the display ratio of claim 1, wherein the determining a target display ratio based on a display area, between the first display area and the second display area, having a width and/or a length that meets a target requirement comprises:
in response to receiving a screen selection instruction, using a screen ratio as the target display ratio.

4. The projection method for automatically adjusting the display ratio of claim 1, wherein the projecting the target display content based on the target display ratio comprises:
determining target position information based on position information of the first display area and position information of the second display area;
rotating an optical engine to a target position based on the target position information, such that a center of the first display area moves to a position in which a center of the second display area is located; and
projecting the target display content at the target position based on the target display ratio.

5. The projection method for automatically adjusting the display ratio of claim 4, wherein the determining target position information based on position information of the first display area and position information of the second display area comprises:
acquiring first position information of a first center of the first display area;
acquiring second position information of a second center of the second display area; and
determining the target position information based on the first position information and the second position information.

6. The projection method for automatically adjusting the display ratio of claim 5, wherein the determining the target position information based on the first position information and the second position information comprises:
constructing a first connection line between the first center and the optical engine and constructing a second connection line between the second center and the optical engine, based on the first position information and the second position information; and
determining target rotation information based on an angle between the first connection line and the second connection line in a horizontal direction and an angle between the first connection line and the second connection line in a vertical direction.

7. The projection method for automatically adjusting the display ratio of claim 1, further comprising: after projecting the target display content at the target position based on the target display ratio,
performing a keystone correction operation on a projected image.

8. A projection apparatus for automatically adjusting a display ratio, comprising:
an image recognition module, configured to determine, in an area to be projected, a first display area having a first display ratio and a second display area having a second display ratio, wherein the first display ratio is a display ratio of a target display content, and the second display ratio is a preset display ratio or a display ratio of a current display content;
a determination module, configured to determine a target display ratio based on a display area, between the first display area and the second display area, having a width and/or a length that meets a target requirement; and
a projection module, provided with a lens and configured to project the target display content based on the target display ratio.

9. A projection device, comprising a processor and a memory, wherein the memory is configured to store a computer program, and the processor is configured to execute the computer program to implement the projection method for automatically adjusting the display ratio of any one of claims 1 to 7.

10. A storage medium, having a computer program stored therein, wherein the computer program is executed to implement the method for automatically adjusting the display ratio of any one of claims 1 to 7.
